Europäisches Patentamt

European Patent Office

Office européen des brevets

(19)

(11) Veröffentlichungsnummer: **0 258 877 B1**

(12) **EUROPÄISCHE PATENTSCHRIFT**

(45) Veröffentlichungstag der Patentschrift: **18.03.92**

(51) Int. Cl.⁵: **B60R 13/06**, B60J 5/04

(21) Anmeldenummer: **87112755.1**

(22) Anmeldetag: **01.09.87**

(54) **Strangförmiges Dichtungsprofil.**

(30) Priorität: **02.09.86 DE 3629865**

(43) Veröffentlichungstag der Anmeldung:
**09.03.88 Patentblatt 88/10**

(45) Bekanntmachung des Hinweises auf die
Patenterteilung:
**18.03.92 Patentblatt 92/12**

(84) Benannte Vertragsstaaten:
**DE ES FR GB IT**

(56) Entgegenhaltungen:
AT-B- 340 662          DE-A- 3 230 142
DE-B- 1 194 272        US-A- 1 998 791
US-A- 2 826 448        US-A- 3 059 292

PATENT ABSTRACTS OF JAPAN, Band 8, Nr.
136 (M-304)[1573], 23. Juni 1984; & JP - A - 59
34920 (NISSAN JIDOSHA K.K.) 25.02.1984

(73) Patentinhaber: **METZELER Automotive Profiles
GmbH**
**Bregenzer Strasse 133**
**W-8990 Lindau / Bodensee(DE)**

(72) Erfinder: **Braner, Rainer**
**Rosenstrasse 9**
**W-6127 Breuberg(DE)**
Erfinder: **Brun, David**
**Dürerstrasse 10**
**W-6120 Erbach(DE)**

(74) Vertreter: **Michelis, Theodor, Dipl.-Ing.**
**Seibert + Michelis Rechtsanwälte und Patentanwälte Tattenbachstrasse 9**
**W-8000 München 22(DE)**

**Beschreibung**

Die Erfindung bezieht sich auf ein Verfahren zur Herstellung eines strangförmigen Dichtungsprofils, insbesondere für Kraftfahrzeuge, aus einem flachen, angenähert rechteckigen Befestigungssteg und einem an einer Schmalseite angesetzten Dichtungsprofil aus weicherem Material sowie mit vom Befestigungssteg ausgehenden Rastnoppen und auf ein nach diesem Verfahren hergestelltes strangförmiges Dichtungsprofil.

Aus der US-A 2 826 448 ist es bekannt, einen derartigen Befestigungssteg mit diskreten kegelartigen Rastnoppen zu versehen, die in entsprechende Öffnungen des Karosseriebleches eingedrückt werden. Derartige Dichtungen lassen sich wegen der Form der Rastnoppen aber nur als Formteile in relativ kurzen Längen herstellen und nur für Profile bei denen der Abstand der Rastnoppen vorher bekannt ist.

Darüberhinaus ist aus der US-A-1 998 791 ein Dichtungsprofil für die Tür eines Kühlschrankes bekannt, das einen Dichtbereich und einen fortlaufenden Haltesteg mit seitlichen Verhakungslippen aufweist, wobei dieses Profil als Ganzes in einen entsprechenden durchlaufenden Spalt in der Kühlschranktür eingeklemmt wird.

Bei der Abdichtung eines Kofferraumdeckels oder einer Motorhaube in Kraftfahrzeugen sind aber im zugehörigen Karosserieblech Öffnungen vorgesehen, in die die entsprechenden Rastnoppen des Dichtungsprofils eingedrückt werden sollen. Diese Öffnungen sind meist in unterschiedlichen Abständen vorgesehen, je nach dem ob das Profil einen gebogenen Bereich durchläuft, wo die Lochabstände enger sein müssen, oder aber gerade Abschnitte, wo größere Abstände erlaubt sind.

Der Erfindung liegt daher die Aufgabe zugrunde, ein Verfahren zur Herstellung eines Dichtungsprofils und ein Dichtungsprofil selbst anzugeben, mit dem ohne zusätzliche Einzelteile und unter einfacher Fertigung eine sichere Montage unter den angegebenen Bedingungen möglich ist, wobei das Profil selbst in großen Längen durch Extrusion herstellbar sein soll.

Zur Lösung dieser Aufgabe ist für das Herstellungsverfahren erfindungsgemäß vorgesehen, daß zunächst das Dichtungsprofil zusammen mit dem Befestigungssteg und einem sich daran anschließenden, kontinuierlich durchlaufenden Haltesteg mit seitlichen Verhakungslippen einstückig extrudiert wird und anschließend längs verlaufende Abschnitte des Haltesteges und der Verankerungslippen derart ausgeschnitten werden, daß allein die diskreten Rastnoppen stehen bleiben.

Durch ein derartiges zunächst einstückiges durchlaufendes Herstellen durch Extrusion und anschließendes abschnittsweises Ausschneiden des Haltesteges können damit in den unmittelbar am Einsatzort erforderlichen Abständen Rastnoppen geschaffen werden, die dann einfach in die entsprechenden Öffnungen des Karosseriebleches eingedrückt werden.

Ein nach diesem Verfahren hergestelltes strangförmiges Dichtungsprofil ist erfindungsgemäß dadurch gekennzeichnet, daß die integral mit dem Befestigungssteg integrierten Rastnoppen aus stehen gebliebenen, freigeschnittenen Abschnitten eines mit dem Befestigungssteg durchgehend extrudierten Haltesteges bestehen und zwei vom Ende der Rastnoppen ausgehenden, widerhakenförmig zum Befestigungssteg zurückgeneigten Verhakungslippen aufweisen.

Es ist dabei zweckmäßig, wenn die Verhakungslippen im Winkel von 80 - 100 Grad zueinander verlaufen.

Zur leichteren Montage und besseren Arretierung können die Verhakungslippen an ihren freien Enden stufenförmige Einziehungen aufweisen.

Um dabei zu verhindern, daß die Rastnoppen bei der Montage des Dichtungsprofils ganz durch die Öffnungen in der Karosserie gedrückt werden, ist es zweckmäßig, wenn die Verhakungslippen an den freien Enden der stufenförmigen Einziehungen rechtwinklig nach außen gerichtete Ansätze aufweisen.

Zur Ermöglichung der Demontage des Dichtungsprofils ohne die Gefahr eines Abreißens der Rastnoppen kann zentral in den Haltesteg ein vertikaler Steg aus zähem Material mit einem hohen Weiterreißwiderstand einextrudiert sein.

Es ist aber auch möglich, daß im Übergangsbereich vom Haltesteg zum Befestigungssteg in die Oberfläche ein zähes Material mit hohem Weiterreißwiderstand integriert ist.

Als zähes Material kann Polyethylen verwendet und dieses in Form einer Folie koextrudiert werden.

Es ist zur Verhinderung eines Abreißens aber auch möglich, den Haltesteg im Bereich zwischen Befestigungssteg und Ansatzbereich der Verhakungslippen aus einem zähen Material zu fertigen.

Es sind dabei zweckmäßigerweise über die Länge des Befestigungssteges im vorgegebenen Abstand voneinander mehrere Rastnoppen angeordnet.

Anhand einer schematischen Zeichnung sind Aufbau und Wirkunbgsweise von Ausführungsbeispielen nach der Erfindung näher erläutert. Dabei zeigen

Fig. 1    einen Querschnitt durch ein Dichtungsprofil mit L-förmig angesetzter Dichtlippe;

Fig. 2    einen Querschnitt durch ein Dichtungsprofil mit angesetztem schlauchförmigen Dichtbereich;

Fig. 3    einen Längsschnitt durch das Dichtungsprofil entsprechend der Schnittlinie III-III nach Fig. 1 und

Fig. 4     eine weitere Ausgestaltung des Dichtungsprofils mit Bereichen aus einem zäheren Material.

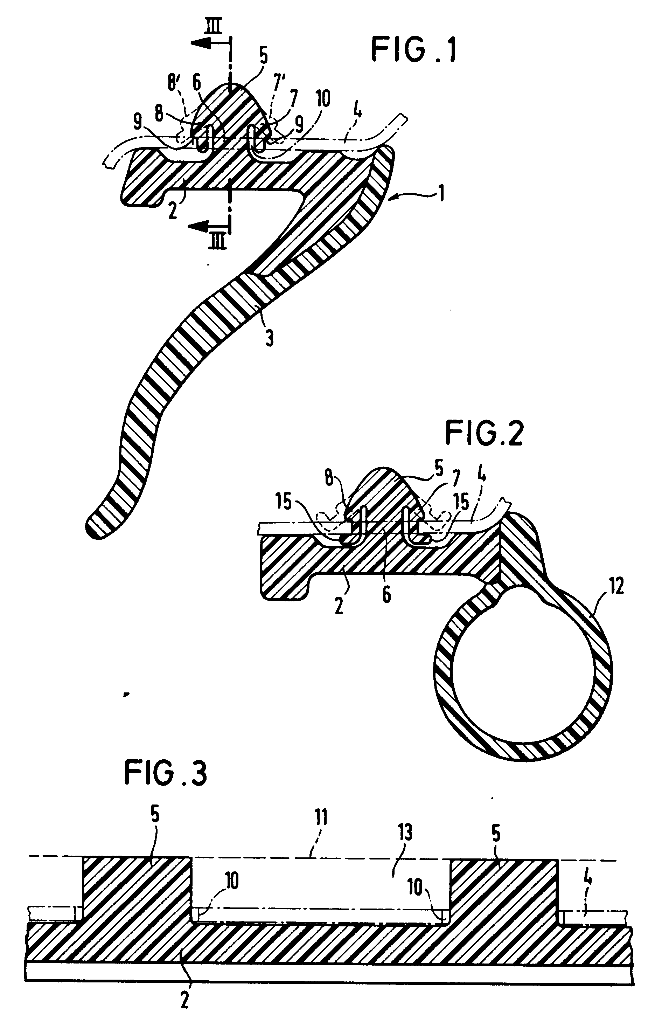

Wie man aus dem Querschnitt aus Fig. 1 ersieht, besteht das Dichtungsprofil 1 aus einem flachen angenähert rechteckigen Befestigungssteg 2 aus härterem Material, an das angenähert L-förmig eine Dichtlippe 3 aus weicherem Material einstükkig anextrudiert ist. Dieses Dichtungsprofil 1 soll in einem strichpunktiert angedeuten Karosserieblech 4, beispielsweise einer Fronthaube eines Kraftfahrzeuges, festgelegt werden. Dazu weist der Befestigungssteg 2 in vorgegebenen Abständen voneinander - wie das insbesondere aus Fig. 3 zu ersehen ist - einstückig mit dem Befestigungssteg 2 ausgebildete Rastnoppen 5 auf. Diese Rastnoppen 5 bestehen aus einem senkrecht vom Befestigungssteg 2 ausgehendem Haltesteg 6 und zwei von seinem oberen Ende ausgehenden widerhakenförmig zum Befestigungssteg zurückgeneigten Verhakungslippen 7 und 8.

Diese Verhakungslippen 7 und 8 verlaufen zueinander in einem Winkel von 80 - 100°, insbesondere 90°, wie das durch die gestrichelte, unbelastete Stellung 7′ und 8′ gezeigt ist. Die freien Enden der beiden Verhakungslippen 7 und 8 sind dabei stufenförmig verjüngt, indem sie auf ihrer Oberseite eine rechtwinklige Einziehung 9 aufweisen.

Bei der Montage werden nun diese Rastnoppen 5 von unten durch entsprechende Langlöcher 10 im Karosserieblech 4 gedrückt, bis die Verhakungslippen 7 und 8 sich auf der Innenseite des Bleches 4 frei spreizen können, oder aber zumindest mit ihren Einziehungen 9 auf der Gegenseite des Bleches einrasten, um damit ein Zurückziehen des Profils 1 bzw. des Befestigungssteges 2 sicher zu verhindern.

Eine gleichartige Ausbildung ist in Fig. 2 gezeigt, bei der jedoch an dem Befestigungssteg 2 ein schlauchförmiges Dichtungsprofil 12 aus weicherem Material anextrudiert ist.

Ferner sind bei diesem Ausführungsbeispiel die Verhakungslippen 7 und 8 an den freien Enden der stufenförmigen Einziehungen 9 mit rechtwinklig nach außen gerichteten Ansätzen 15 versehen, die das Karosserieblech 4 auf der Innenseite hintergreifen. Mit der Anordnung derartiger Ansätze 15 wird sichergestellt, daß beim Eindrücken der Rastnoppen 5 diese sich nicht vollständig durch die Öffnungen 10 hindurchdrücken.

Wie man aus dem Längsschnitt nach Fig. 3 ersieht, weist der Befestigungssteg 2 im vorgegebenen Abstand voneinander mehrere Rastnoppen 5 auf. Das Profil mit den Rastnoppen ist dabei derart herstellbar, daß zunächst das Profil mit einem durchgehenden, integralen Rastnoppenprofil, entsprechend der gestrichelten Außenkontur 11, extrudiert wird. Anschließend werden die freizulassenden Bereiche 13 zwischen den stehenbleibenden eigentlichen Rastnoppen 5 weggeschnitten oder ausgeklinkt, so daß sich ein Profil mit einzelnen diskreten Rastnoppen ergibt. Die Rastnoppen 5 sollen zweckmäßigerweise eine Mi ndestlänge von etwa 10 mm aufweisen, während der Abstand der einzelnen Rastnoppen 5 voneinander bei etwa 100 mm liegen soll.

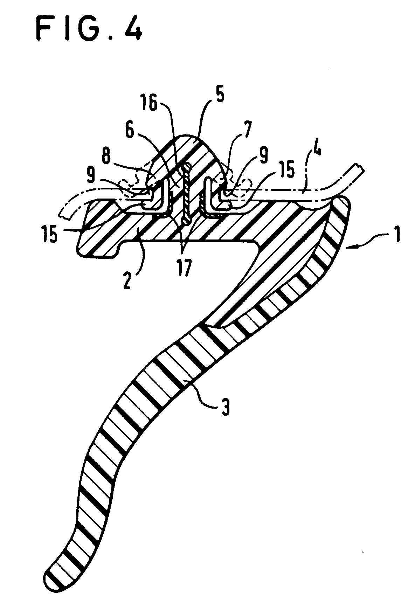

Das in Fig. 4 dargestellte Profil entspricht in seiner Grundform dem nach Fig. 1, weist jedoch ebenfalls die Ansätze 15 auf. Darüberhinaus ist hier in den Haltesteg 6 ein vertikaler Steg 16 aus einem zähen Material mit hohem Weiterreißwiderstand einextrudiert, um als Abreißsicherung bei einer eventuell erforderlichen Demontage des Dichtungsprofils wirksam zu werden. Dieses zähe Material kann aus Polyethylen bestehen und in Form einer entsprechend geformten Folie einextrudiert sein.

Stattdessen oder ergänzend dazu kann als Abreißsicherung der Übergangsbereich vom Haltesteg 6 zum Befestigungssteg 2 mit einer verfestigten Oberfläche versehen sein, indem beispielsweise in diesem Bereich ebenfalls eine Polyethylen-Folie 17 festhaftend aufgebracht oder unmittelbar anextrudiert ist.

Somit ist es durch Verstärkung entsprechender Bereiche möglich, die Dichtung trotz ihrer festen Verankerung in den Öffnungen der Karosserie gegebenenfalls ohne Abreißen der Rastnoppen wieder auszubauen.

Insgesamt ist also ein Dichtungsprofil geschaffen, das einstückig extrudiert und mittels diskreter Rastnoppen ohne zusätzliche Befestigungsteile oder Werkzeuge in die entsprechenden Karosserieabschnitte eingeclipst werden kann.

## Patentansprüche

1.    Verfahren zur Herstellung eines strangförmigen Dichtungsprofils (1), insbesondere für Kraftfahrzeuge, aus einem flachen, angenähert rechtekkigen Befestigungssteg (2) und einem an einer Schmalseite angesetzten Dichtprofil (3) aus weicherem Material sowie mit vom Befestigungssteg (2) ausgehenden Rastnoppen (5), dadurch gekennzeichnet, daß zunächst das Dichtungsprofil (3) zusammen mit dem Befestigungssteg (2) und einem sich daran anschließenden, kontinuierlich durchlaufenden Haltesteg (6) mit seitlichen Verhakungslippen (7, 8) einstückig extrudiert wird und anschließend längs verlaufende Abschnitte des Haltesteges (6) und der Verankerungslippen (7, 8) derart ausgeschnitten werden, daß allein die diskreten Rastnoppen (5) stehen bleiben.

2. Strangförmiges Dichtungsprofil, das nach dem Verfahren nach Anspruch 1 hergestellt ist, dadurch gekennzeichnet, daß die integral mit dem Befestigungssteg (2) extrudierten Rastnoppen (5) aus stehengebliebenen, freigeschnittenen Abschnitten eines mit dem Befestigungssteg (2) durchgehend extrudierten Haltesteges (6) bestehen und zwei vom Ende der Rastnoppen (5) ausgehenden, widerhakenförmig zum Befestigungssteg zurückgeneigten Verhakungslippen (7, 8) aufweisen.

3. Strangförmiges Dichtungsprofil nach Anspruch 2, dadurch gekennzeichnet, daß die Verhakungslippen (7, 8) im Winkel von 80 bis 100° zueinander verlaufen.

4. Strangförmiges Dichtungsprofil nach Anspruch 2 oder 3, dadurch gekennzeichnet, daß die Verhakungslippen (7, 8) an ihren freien Enden stufenförmige Einziehungen (9) aufweisen.

5. Strangförmiges Dichtungsprofil nach Anspruch 4, dadurch gekennzeichnet, daß die Verhakungslippen (7, 8) an den freien Enden der stufenförmigen Einziehungen 9 rechtwinklig nach außen gerichtete Ansätze (15) aufweisen.

6. Strangförmiges Dichtungsprofil nach einem der Ansprüche 2 bis 5, dadurch gekennzeichnet, daß zentral in den Haltesteg (6) ein vertikaler Steg (16) aus zähem Material mit hohem Weiterreißwiderstand einextrudiert ist.

7. Strangförmiges Dichtungsprofil nach einem oder mehreren der Ansprüche 2 bis 6, dadurch gekennzeichnet, daß im Übergangsbereich vom Haltesteg (6) zum Befestigungssteg (2) in die Oberfläche ein zähes Material (17) mit hohem Weiterreißwiderstand integriert ist.

8. Strangförmiges Dichtungsprofil nach Anspruch 6 oder 7, dadurch gekennzeichnet, daß als zähes Material Polyethylen verwendet ist.

9. Strangförmiges Dichtungsprofil nach Anspruch 8, dadurch gekennzeichnet, daß das Polyethylen in Form einer Folie koextrudiert ist.

10. Strangförmiges Dichtungsprofil nach einem oder mehreren der Ansprüche 2 bis 5, dadurch gekennzeichnet, daß der Haltesteg (6) im Bereich zwischen Befestigungssteg (2) und Ansatzbereich der Verhakungslippen (7, 8) aus einem zähen Material mit hohem Weiterreißwiderstand besteht.

**Claims**

1. A method for manufacturing an extruded sealing profile (1), more particularly for motor vehicles, from a flat, approximately rectangular securing web (2) and a sealing profile (3) made of softer material adjoining a narrow side as well as locking nubs (5) extending from the securing web (2), characterised in that the sealing profile (3) is firstly extruded in one piece together with the securing web (2) and a continuous holding web (6) adjoining the securing web and comprising lateral hooking lips (7, 8) and subsequently longitudinally extending sections of the holding web (6) and hooking lips (7, 8) are cut out in such a manner that only the discrete locking nubs (5) remain.

2. An extruded sealing profile manufactured according to the method of claim 1, characterised in that the locking nubs (5) integrally extruded with the securing web (2) are formed by remaining cut-free sections of a holding web (6) continuously extruded with the securing web (2) and two hooking lips (7, 8) extending from the end of the locking nubs (5) and bent back in the shape of barbs towards the securing web.

3. An extruded sealing profile according to claim 2, characterised in that the hooking lips (7, 8) extend at an angle of between 80 and 100° relative to one another.

4. An extruded sealing profile according to claim 2 or 3, characterised in that the hooking lips (7, 8) comprise stepped indentations (9) at their free ends.

5. An extruded sealing profile according to claim 4, characterised in that at the free ends of the stepped indentations (9) the hooking lips (7, 8) comprise extensions (15) pointing outwards at right angles.

6. An extruded sealing profile according to one of claims 2 to 5, characterised in that a vertical web (16) made of tough material having high tearing resistance is extruded centrally into the holding web (6).

7. An extruded sealing profile according to one or more of claims 2 to 6, characterised in that a tough material (17) having high tearing resistance is integrated into the surface in the transition region between holding web (6) and securing web (2).

8. An extruded sealing profile according to claim 6 or 7, characterised in that polyethylene is used as a tough material.

9. An extruded sealing profile according to claim 8, characterised in that the polyethylene is coextruded in the form of a foil.

10. An extruded sealing profile according to one or more of claims 2 to 5, characterised in that in the region between the securing web (2) and the adjoining region of the hooking lips (7, 8), the holding web (5) is made of a tough material having high tearing resistance.

**Revendications**

1. Procédé de fabrication d'un profilé d'étanchéité (1) en forme de cordon, notamment pour des véhicules automobiles, constitué d'une âme de fixation (2) plate et à peu près rectangulaire et d'un profilé d'étanchéité (3) rattaché à un côté étroit et en un matériau plus souple, ainsi que de boutons d'encliquetage (5) issus de l'âme de fixation (2), caractérisé en ce qu'il consiste à extruder d'abord, d'une seule pièce, le profilé d'étanchéité (3) avec l'âme de fixation (2) et une âme de maintien (6) qui s'y raccorde, qui s'étend d'une manière continue et qui est munie de lèvres d'accrochage (7, 8) et ensuite à découper des tronçons, s'étendant en longueur, de l'âme de maintien (6) et des lèvres d'ancrage (7, 8) de façon à ne laisser subsister que les boutons d'encliquetage (5) isolés.

2. Profilé d'étanchéité en forme de cordon, fabriqué par le procédé suivant la revendication 1, caractérisé en ce que les boutons d'encliquetage (5) extrudés d'une pièce avec l'âme de fixation (2), sont constitués de tronçons, restants et dégagés par découpage, d'une âme de maintien (6) extrudée d'une pièce avec l'âme de fixation (2) et comportent deux lèvres d'accrochage (7, 8) issues de l'extrémité des boutons d'encliquetage (5) et retournant, de manière inclinée en forme de crochet, vers l'âme de fixation.

3. Profilé d'étanchéité en forme de cordon suivant la revendication 2, caractérisé en ce que les lèvres d'accrochage (7, 8) font entre elles un angle de 80 à 100°.

4. Profilé d'étanchéité en forme de cordon suivant la revendication 2 ou 3, caractérisé en ce que les lèvres d'accrochage (7, 8) comportent, à leur extrémité libre, des parties rétrécies en forme d'épaulement.

5. Profilé d'étanchéité en forme de cordon suivant la revendication 4, caractérisé en ce que les lèvres d'accrochage (7, 8) comportent, aux extrémités libres des parties rétrécies (9) en forme d'épaulement, des rebords (15) dirigés à angle droit vers l'extérieur.

6. Profilé d'étanchéité en forme de cordon suivant l'une des revendications 2 à 5, caractérisé en ce que, dans la partie centrale de l'âme de maintien (6), est extrudée une âme verticale (16) en matériau tenace ayant une grande résistance à la propagation d'une déchirure.

7. Profilé d'étanchéité en forme de cordon suivant l'une ou plusieurs des revendications 2 à 6, caractérisé en ce que, dans la région de transition de l'âme de maintien (6) à l'âme de fixation (2), est intégré à la surface un matériau (17) tenace ayant une grande résistance à la propagation de la déchirure.

8. Profilé d'étanchéité en forme de cordon suivant la revendication 6 ou 7, caractérisé en ce que du polyéthylène est utilisé comme matériau tenace.

9. Profilé d'étanchéité en forme de cordon suivant la revendication 8, caractérisé en ce que le polyéthylène est coextrudé sous la forme d'une feuille.

10. Profilé d'étanchéité en forme de cordon suivant l'une ou plusieurs des revendications 2 à 5, caractérisé en ce que l'âme de maintien (6) est constituée, dans la région comprise entre l'âme de fixation (2) et la région des rebords des lèvres d'accrochage (7, 8), en un matériau tenace ayant une grande résistance à la propagation de la déchirure.

FIG.1

FIG.2

FIG.3

# FIG. 4